# EUROPEAN PATENT APPLICATION

(11) **EP 4 797 102 A1**
(43) Date of publication of application: **26.08.2026**
(21) Application number: 25305228.6
(22) Date of filing: 20.02.2025
(51) Int. Cl.: G06F 11/3604

(54) **METHOD FOR AUTOMATICALLY VERIFYING THE CORRECTNESS OF A TARGET COMPUTER PROGRAM**

(71) Applicant: Commissariat à l'Energie Atomique et aux Energies Alternatives, 75015 Paris (FR); THALES, 92190 Meudon (FR)
(72) Inventor: BERNIER, Teo, 92190 MEUDON (FR); PREVOSTO, Virgile, 91191 Gif-sur-Yvette Cedex (FR); KOSMATOV, Nikolay, 92190 MEUDON (FR)
(74) Representative: Germain Maureau

(57) **Abstract**

The present invention relates to a method for automatically verifying the correctness of a target computer program, said target computer program being defined by first code instructions in a given programming language, characterized in that it comprises performing, by a data processing unit (21) of a server (2), steps of:
(a) Obtaining a collection of mathematical proof obligations, the truth of which implies correctness of the target computer program;
(b) Constructing a set of proof strategies, each strategy being defined as a sequence of at least one elementary strategy based on a proof tactic and/or at least one automated prover run, for attempting to discharge at least one of said proof obligations;
(c) Selecting a priority proof strategy among said set of proof strategies according to a given criterion;
(d) Applying the selected priority proof strategy so as to attempt to discharge at least one of said proof obligations;
(e) Determining whether the correctness of said target computer program is verified as a function of the proof obligations that have been successfully discharged.

## Description

### GENERAL TECHNICAL AREA

The present invention relates to the field of software verification tools. More specifically, it concerns a method for automatically verifying the correctness of a target computer program.

### STATE OF THE ART

In computer science, program analysis is the process of automatically analyzing the behavior of computer programs regarding a property such as correctness, robustness, safety and liveness. In particular, program correctness focuses on ensuring that the program does what it is supposed to do.

The "Evaluation Assurance Level" (EAL1 through EAL7) of a computer program is a numerical grade assigned following the completion of the international standard Common Criteria security evaluation. The increasing assurance levels reflect added assurance requirements that must be met to achieve Common Criteria certification.

The highest levels EAL6 and EAL7 require a "formal verification", i.e. proving the correctness of a system with respect to a certain formal specification or property, using formal methods.

One of the main approaches is deductive verification. It consists of generating from the program code and its specifications (and possibly other annotations) a collection of mathematical "proof obligations" (also referred to as proof goals, or verification conditions (VCs)), the truth of which implies conformance of the program to its specification, and discharging these obligations using either proof assistants (interactive theorem provers) such as HOL, ACL2, Isabelle, Coq or PVS, or automated theorem provers, including in particular satisfiability modulo theories (SMT) solvers.

It can be illustrated by a recent proof of real-life smart card code-a JavaCard Virtual Machine (JCVM)-that was performed by Thales for the highest EAL6-EAL7 levels of Common Criteria certification using Frama-C/WP, see Djoudi, A., Hana, M., Kosmatov, N.: Formal verification of a JavaCard virtual machine with Frama-C. In: the 24th Int. Symp. on Formal Methods (FM 2021). vol. 13047, pp. 427-444. Springer (2021*)*

Frama-C (standing for Framework for Modular Analysis of C programs), is indeed a popular toolset of interoperable modules for analyzing C programs.

Among others, WP (Weakest Precondition) is a module of Frama-C that is designed to perform deductive verification of C programs with respect to their specification in the ACSL specification language, see for instance the document *WP Plug-in Manual For Frama-C 30.0 (Zinc) https:*//*frama-c. com*/*download*/*frama-c-wp-manual.pdf.*

Automated and interactive provers are really powerful but reaching a full formal verification is still a very hard task. Some proof obligations require manually created proof scripts indicating a few initial proof steps to make the obligations more suitable for an automated prover, and even with that some obligations stay unprovable.

Moreover, proof scripts are sensitive to the versions of the deductive verifier, of the code and the specification. Thus, proof scripts not only need to be created once for a given version of the target code, its specification and the verifier, but often have to be recreated when the code or the specification are updated, or the verifier evolves. Thus, the need for manually created proof scripts for the unproven obligations is seen as an important obstacle to a better maintenance of the proved code in the industrial setting.

Recent improvements in Frama-C (see the above-mentioned document *WP Plug-in Manual For Frama-C 30.0 (Zinc),* or the document Automate where Automation Fails: Proof Strategies for Frama-C/WP, Loïc Correnson, Allan Blanchard, Adel Djoudi, and Nikolai Kosmatov, TACAS 2024, LNCS, vol. 14570*)* propose a new mechanism to automatically generate proof scripts from user-defined "proof strategies".

A proof strategy defines so-called "proof tactics" to transform a proof obligation into a conjunction of several, typically simpler ones, that WP can try to prove in turn. A proof strategy can be organized as a sequence of alternatives, each of them consisting of a proof tactic or another proof strategy.

WP offers a large variety of tactics. Common ones include splitting over a Boolean expression; brute-forcing an integer expression within a given range (detailed below); unfolding predicate or function definitions; removing hypotheses; etc. Applying tactics is simple in spirit, although it raises complex issues in practice.

Lists of alternatives can be grouped and given a (strategy) name, that can be used as an elementary alternative as well. Then, specific proof strategies can be associated to specific proof obligations, functions or lemmas.

For instance, the user may associate proof strategy A to every code annotation with name P and proof strategy B to every code annotation without name Q, and finally proof strategy C to other code annotations.

This technique brings satisfaction and saves a very significant effort, as the same strategy is often able to successfully prove several dozens of proof obligations, which confirms the reusability of strategies for multiple obligations. For the example of JCVM, after a manual creation of strategies (~2 days), WP automatically produces more than 50% of the required scripts, whose manual creation would take ~1 person-month.

Nevertheless, even with strategies many proof obligations remain unproven because the existing proof scripts, yet automatically generated, are not sufficient.

There is still a need for an efficient and adaptive technique capable to automatically verifying the correctness of any computer program.

The present invention improves the situation.

### PRESENTATION OF THE INVENTION

The present invention therefore relates, according to a first aspect, to a method for automatically verifying the correctness of a target computer program, said target computer program being defined by first code instructions in a given programming language, characterized in that it comprises performing, by a data processing unit of a server, steps of:
(a) Obtaining a collection of mathematical proof obligations, the truth of which implies correctness of the target computer program;
(b) Constructing a set of proof strategies, each strategy being defined as a sequence of at least one elementary strategy based on a proof tactic and/or at least one automated prover run, for attempting to discharge at least one of said proof obligations;
(c) Selecting a priority proof strategy among said set of proof strategies according to a given criterion;
(d) Applying the selected priority proof strategy so as to attempt to discharge at least one of said proof obligations;
(e) Determining whether the correctness of said target computer program is verified as a function of the proof obligations that have been successfully discharged.

According to advantageous but non limiting features:
Each proof strategy is defined as a sequence of at least one elementary strategy and at least one automated prover run.

Each proof strategy is defined as a sequence of at least one elementary strategy then one automated prover run.

The method comprises a step (b0) before said step (b) of running said at least one automated prover so as to attempt to discharge each one of said proof obligations, steps (b) to (d) being performed only for the remaining proof obligations.

The target computer program is associated to second code instructions in a behavioral specification language, defining said specifications of the target computer program, step (a) comprising generating collection of mathematical proof obligations from said first and second code instructions.

Said first programming language is a language of the C-family, in particular C, and said behavioral specification language is ACSL.

The method comprises a step (a1) of automatically generating at least part of said second code instructions in the behavioral specification language from the first code instructions.

Each elementary strategy of each proof strategy is selected from a list of k>0 given elementary strategies.

Said set of proof strategies comprises a proof strategy for each sequence of up to h≤k different elementary strategies of said list of given elementary strategies.

Said given criterion is function of an expected success rate of the proof strategies.

Step (d) comprises updating said expected success rate of the proof strategies according to the result of the application of the selected priority proof strategy.

Steps (c) and (d) are performed for each proof obligation, the method comprising, if an occurrence of step (d) is not successful, repeating said steps (d) for a next selected priority proof strategy.

Step (c) comprises, sorting said set of proof strategies according to the given criterion, the priority proof strategy being selected as the first proof strategies of the sorted set.

According to a second aspect, the present invention proposes a server for automatically verifying the correctness of computer programs, characterized in that it comprises a data processing unit configured to, for a target computer program being defined by first code instructions in a given programming language:
- Obtain a collection of mathematical proof obligations, the truth of which implies correctness of the target computer program;
- Construct a set of proof strategies, each strategy being defined as a sequence of at least one elementary strategy based on a proof tactic and/or at least one automated prover run, for attempting to discharge at least one of said proof obligations;
- Select a priority proof strategy among said set of proof strategies according to a given criterion;
- Apply the selected priority proof strategy so as to attempt to discharge at least one of said proof obligations;
- Determine whether the correctness of said target computer program is verified as a function of the proof obligations that have been successfully discharged.

According to a third and a fourth aspects, the present invention proposes a computer program product comprising code instructions for executing a method according to the first aspect for automatically verifying the correctness of a target computer program; and a storage medium readable by computer equipment on which is recorded a computer program product comprising code instructions for executing a method according to the first aspect for automatically verifying the correctness of a target computer program.

### PRESENTATION OF FIGURES

Other features and advantages of the present invention will become apparent from the following description of a preferred embodiment. This description will be given with reference to the attached drawings in which:
[Fig. 1] Figure 1 is a diagram of a system for implementing the process according to the invention;
[Fig. 2] Figure 2 is a flow chart illustrating the steps in one embodiment of the method according to the invention.

### DETAILED DESCRIPTION

### Architecture

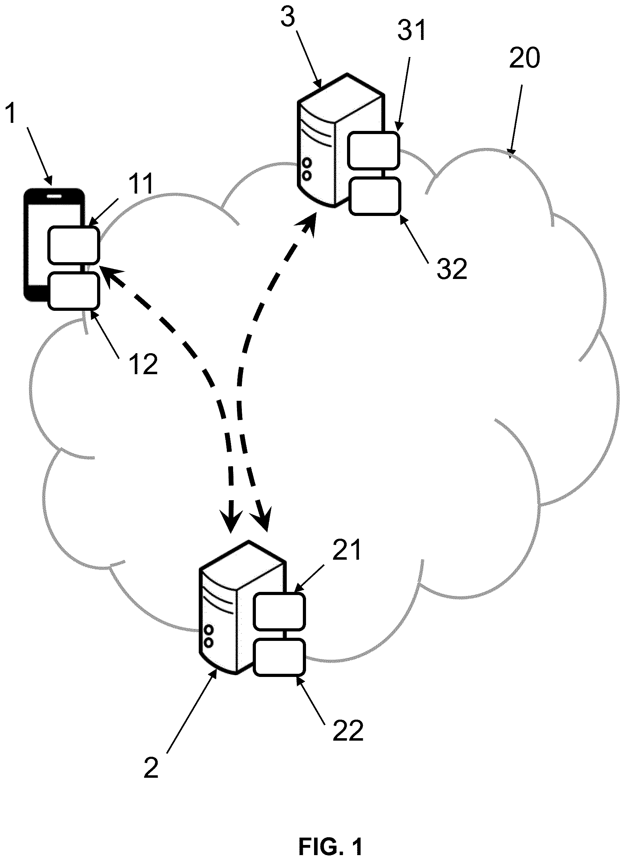

According to a first aspect, the present invention concerns a method for automatically verifying the correctness of a target computer program, in a system as represented by **figure 1****.** The program is defined by first code instructions in a given programming language, i.e. it is written in this given programming language, which is for instance a language of the C-family, in particular C itself.

Said correctness of a target computer program is with respect to a specification of this program. The program is considered as correct with respect to said specification if it behaves as specified. To rephrase again, for each input respecting the specification, it produces an output satisfying the specification. This generally includes termination, i.e. that the output is always eventually returned (complete correctness).

By verifying said correctness, it is meant attempting to mathematically prove it (or possibly disproving it), using a deductive verifier such as Frama-C/WP. This is also referred to as formal verification of said target computer program.

This corresponds to automatically proving the greatest number of "proof obligations", also called proof goals, or verification conditions (VCs), associated with the program (see below).

It is to be understood that the output of the present method is not necessarily a Boolean, but rather a score representative of the level of proof automation.

Optimally, each proof obligation is proven, and in this case the correctness of the program is proven, i.e. fully verified.

To the contrary, if at least one proof obligation is disproven (proven as false), it is proven that the program is not correct, hence the verification is rejected.

Generally, some proof obligations stay unproven, so that the output could be the rate of proof obligations successfully proven.

Preferably, the target computer program is associated to second code instructions in a behavioral specification language, defining said specifications of the target computer program. The second code instructions could be simply annotations of the first code instructions, i.e. comments within the first code instructions, as it will be presented.

In a preferred embodiment where the programming language of the first instructions is C, such behavioral specification language is ACSL (ANSI/ISO C Specification Language).

ACSL specifications, written inside special comments "/*@...*/", basically consist of function contracts and code annotations. Function contracts include pre-conditions (requires clauses) and post-conditions (ensures clauses), containing pure logical formulas that shall be verified respectively before and after any call to a function. The *assigns* clause specifies the possible side effects of the function on global variables and pointers received in parameters. Code annotations (e.g. assert clauses) contain pure logical formulas attached to a particular program point that shall be verified at each execution path going through this program point.

As shown in Figure 1, there are at least a server 2 for performing said method, referred to as verification server, preferably at least one client terminal 1 such as a desktop computer, and at least one server 3 implementing an automated prover, referred to as prover server. In our preferred example, the verification server 2 implements Frama-C, but any other framework could be used.

There may be a plurality of prover servers 3, and each prover server 3 is generally an existing one, implementing a known automated prover. The prover is generally an "external" prover, i.e. the server 3 is remote.

Known provers are for instance Alt-Ergo, Z3, CVC4, CVC5, etc. A list of available provers is assumed to be available. The present invention will not be limited to any list of provers.

It is to be noted that the client terminal 1 and/or a prover server 3 can be the same equipment as the verifier server 2. In particular, the verification server 2 can implement a simple prover referred to as a solver, such as Qed.

Equipments 1, 2, 3 are connected through a network 20 such as internet. They all present a data processing unit 11, 21, 31 (a processor) and a data storage unit 12, 22, 32 (a memory).

### Method

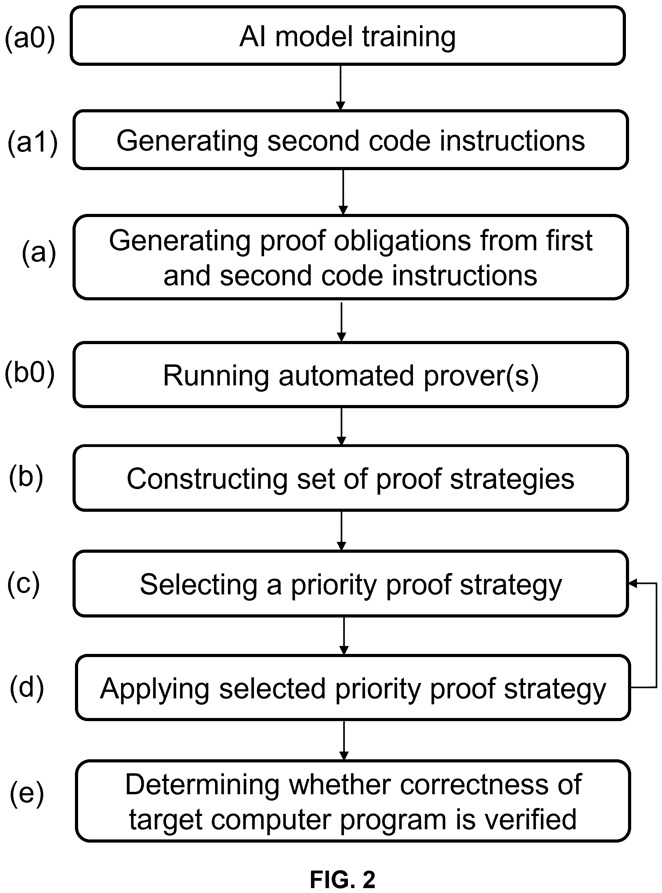

With reference to **Figure 2****,** the present method is implemented by the data processing unit 21 of the verification server 2, and begins with a generic step (a) of obtaining a collection of mathematical proof obligations, the truth of which implies correctness of the target computer program. Note that step (a) can start with receiving said first code instructions (and possibly said second code instructions of the target computer program, see after).

This step (a) is known to the skilled person and may be performed in any way. Preferably, when the target computer program is associated to second code instructions in the behavioral specification language (such as ACSL), defining said specifications of the target computer program, and step (a) comprises generating the collection of mathematical proof obligations from said first and second code instructions. For instance, the WP plug-in of Frama-C is able to generate the proof obligations from the first and second code instructions (the annotations, see below a list of possible annotations).

As already discussed, the proof obligations, also called proof goals, or verification conditions (VCs) are pure logic formulae in a first-order logic language.

Step (a) may comprise translating the second instruction into said equivalent pure logic formulae in a first-order logic language, and then directly simplifying each formula generated, for instance using a solver such as Qed.

In a preferred embodiment, the method may comprise a step (a1) of automatically generating at least part of said second code instructions in the behavioral specification from the first code instructions language (or directly corresponding proof obligations). In particular, there may already be annotations, and step (a1) comprises generating further annotations in order to generate additional proof obligations. For instance, the RTE plug-in of Frama-C can generate code annotations that are sufficient for the program to never go into unspecified or undefined behaviors.

In particular, the WP plug-in supports the following code annotations (with the number of obligations (VCs) that are generated accordingly):
- *lemma: 1* VC
- *axiom:* no VC (admitted with no proof)
- *ensures:* 1 VC
- *exits:* 1 VC
- *disjoint:* 1 VC
- *complete:* 1 VC
- *requires:* 1 VC for each call
- *terminates:* 1 VC for each call, 1 VC for each loop without "loop variant"
- *decreases:* 1 VC for each recursive call
- *assigns:* 1 VC for each assigned value
- *admit:* no VC (admitted with no proof)
- *assert*/*check:* 1 VC
- *loop invariant:* 2 VCs (established, preserved)
- *loop variant* (integer): 2 VCs (positive, decreasing)
- *loop variant* (general measure): 1 VC (the measure is assumed to be well-founded)
- *loop assigns:* 1 VC for each assigned value within the loop

In addition, the RTE plug-in asks the Frama-C kernel to generate automatically some annotations when they are missing:
- *terminates*
- *exits*
- *assigns,* for functions without body

See for example the following first code instructions for a simple target computer program returning the middle value of two inputs, including annotations as second instructions (3 annotations of lines 1-5 provided as input, and 4 annotations of lines 8 and 9 being generated by RTE):

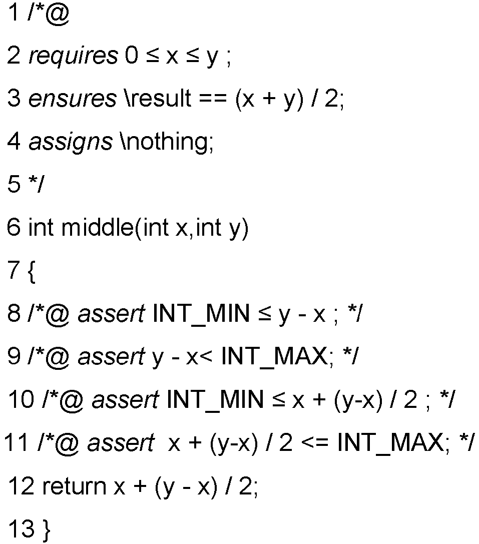

Moreover, the kernel itself will generate two annotations assessing that the function always returns normally.

Each of the annotations ensures, assigns, assert, terminates and exits generates a single VC, i.e. a collection of 8 VCs is obtained. Each one shall be discharged, i.e. proven as true if possible.

Preferably, the method then comprises an optional step (b0) of running said at least one automated prover, so as to attempt to discharge each one of said proof obligations. To rephrase, for each proof obligation of said collection, at least one prover is directly run, preferably up to all provers of the list of available provers, in particular starting by the built-in solvers such as Qed. The idea is to discharge already as many proof obligations as possible, as fast as possible. Indeed, a large part of proof obligations can automatically be proven using Qed then Alt-Ergo.

Like steps (a1) and (a), this optional step (b0) is well known to the skilled person and will not be further detailed.

Note that, if step (b0) was able to successfully discharge every proof obligation, a step (e) of determining whether the correctness of said target computer program is verified as a function of the proof obligations that have been successfully discharged, could be directly performed.

Let us assume that at least one proof obligation stays unproved (or that step (b0) was not performed).

Then in a step (b), instead of merely applying a chosen strategy, the method comprises obtaining a whole set of proof strategies.

Each proof strategy is still defined as a sequence of at least one elementary strategy based on proof tactic and/or at least one automated prover run, for attempting to discharge at least one of said proof obligations, preferably each remaining proof obligation (i.e. for which a direct run of provers has failed). In other words, step (b) (and the following steps) can be performed for each proof obligation.

Each elementary strategy, also referred to as "strategy block", is based on a proof tactic, which means that said elementary strategy contains this single proof tactic (and applying the elementary strategy corresponds to applying the tactic), but two elementary proof strategies can refer to the same tactic with a different instantiation. Nevertheless, for the sake of simplicity, in the following description we will consider elementary strategies and tactics as equivalent.

Note that proof strategies are generally "composed" strategies but a proof strategy may still comprise a single elementary strategy and thus actually involve a single tactic.

In a preferred embodiment, each proof strategy is defined as a sequence of at least one elementary strategy and at least one automated prover run, and even preferably each proof strategy is defined as a sequence of at least one elementary strategy then (exactly) one automated prover run (preferably with a given timeout). Indeed, the tactic(s) of the elementary strategy(ies) firstly reduce(s) the complexity of the proof obligation, and then a prover run can be attempted.

Preferably, each elementary strategy preferably belongs to a list of given elementary strategies T₁, ..., Tₖ, with k>0, i.e. each elementary strategy of each proof strategy is selected from said list of k given elementary strategies. This is equivalent to having a list of given proof tactics.

In particular, some efficient tactics are already well known, for instance from Frama-C, including general tactics, integers & bit-wise tactics, and domain specific tactics.

Thus, said list of given proof tactics preferably includes some or all of the following known proof tactics (when suitable to the current obligation):
- general tactics
   ∘ *Absurd:* Contradict the obligation/goal (G) or a Hypothesis (H). This tactic can prove the obligation by contradiction (Δ $= G ⊳ Δ$, ¬G ⊨ false), or select a hypothesis H, and change the obligation to ¬H (Δ, $H = G ⊳ Δ = ¬ H$)
   ∘ *Clear*: Remove Hypothesis. A hypothesis can be selected and removed from the context (Δ, $H = G ⊳ Δ = G$)
   ∘ *Choice:* Select an obligation Alternative. When the obligation is a disjunction, this selects one alternative and discards the others (Δ ⊨ Γ, $G ⊳ Δ = G$)
   ∘ *Compound:* Decompose compound equalities. When an equality between two records is selected, it is decomposed field by field ( $a = b ⊳ ∧ a . {f}_{i} = b . {f}_{i}$)
   ∘ *Contrapose:* Swap and Negate Hypothesis with Conclusion. A selected hypothesis (typically, a negation) is swapped with the obligation (Δ, $H = G ⊳ Δ$, ¬G ⊨ ¬H)
   ∘ *Cut:* Use Intermediate Hypothesis. This tactic introduces a new clause C with the composer to prove the obligation. There are two variants of the tactic.
      ▪ The Modus-Ponens variant where the clause C is used as an intermediate proof step ( $Δ = G ⊳ Δ = C$ then Δ, C ⊨ G)
      ▪ the Case Analysis variant where the clause C is used with a split ( $Δ = G ⊳ Δ$, C ⊨ G then Δ, ¬C ⊨ G)
   ∘ *Definition:* Unfold predicate and logic function definition. A term f(e₁, ... , eₙ) or a predicate P(e₁, ... , eₙ) is simply selected, and replaced by its definition, when available.
   ∘ *Filter*: Dependent Erasure of Hypotheses. This tactic is always applicable. It removes hypotheses from the obligation on a variable used basis. When variables are compound (record or array) a finer heuristic is used to detect which parts of the variable is relevant. A transitive closure of dependencies is also used. However, it is always possible that too many hypotheses are removed. The tactic also has a variant where only hypotheses not relevant to the obligation are retained. This is useful to find absurd hypotheses that are completely disjoint from the obligation.
   ∘ *Instance:* Instantiate properties. A hypothesis is selected with one or several ∀ quantifiers, or an ∃ quantified obligation. Then, one or several of the quantified parameters are instantiated. In case of ∀ quantifier over integer, a range of values can be instantiated instead.
      ▪ When instantiating hypothesis with an expression e: $Δ , ∀ x P \left(x\right) = G ⊳ Δ , P \left(e\right) = G$
      ▪ When instantiating with a range of values n ... m: $Δ , ∀ x P \left(x\right) = G ⊳ Δ , P \left(n\right) … P \left(m\right) = G$
      ▪ When instantiating an obligation with an expression e: $Δ = ∃ \times G \left(x\right) ⊳ Δ = G \left(e\right)$
   *∘ Intuition:* Decompose with Conjunctive/Disjunctive Normal Form. A hypothesis or an obligation with nested conjunctions and disjunctions can be selected. The tactic then computes the conjunctive or disjunctive normal form of the selection and splits the obligation accordingly.
   ∘ *Lemma:* Search & Instantiate Lemma. For a term in the obligation, the parameters of a lemma in a list of lemmas related to the term can be instantiated, like with the *Instance* tactic.
   ∘ *Rewrite:* Replace Terms. This tactic uses an equality in a hypothesis to replace each occurrence of a term by another one. The tactic exists with two variants:
      ▪ the left-variant which rewrites a into b from equality a = b, and
      ▪ the right-variant which rewrites b into a from equality a = b.
      The original equality hypothesis is removed from the obligation. The left-variant is written as Δ, $a = b = G ⊳ Δ \left[a\right.$ ← b] ⊨ G[a ← b]. The right-variant is written as Δ, a = b ⊨ G $⊳ Δ \left[b←a\right] = G \left[b←a\right]$.
   ∘ *Split:* Decompose Logical Connectives and Conditionals. This is the most versatile available tactic. It decomposes merely any logical operator following the sequent calculus rules. Typically: $Δ , \left(H1∨H2\right) = G ⊳ Δ , H 1 = G$ $Δ , H 2 = G$ $Δ = \left(G1∧G2\right) ⊳ Δ = G 1$ $Δ = G 2$ $Δ , H ? P : Q = G ⊳ Δ , H , P = G$ $Δ , ¬ H , Q = G$ Finally, when an arithmetic comparison over a and b is selected, the tactics makes a split over a = b, a < b and a > b: $Δ \left|=G⊳Δ, a<b=G\right.$ $Δ , a = b = G$ $Δ , a > b = G$
- Integers & Bit-wised Tactics
   *∘ BitRange:* Range of logical bitwise operators. This tactical applies the two following lemmas to the current obligation.
      ▪ The first lemma is on logical-or, and only applies to positive integers: $\frac{{∧}_{i} 0 \leq {x}_{i} \leq {2}^{p}}{0 \leq lor \left({x}_{1},…,{x}_{n}\right) \leq {2}^{p}}$
      ▪ The second lemma is on logical-and, and applies to at-least one positive integer:
      $\frac{{∨}_{i} 0 \leq {x}_{i} ∧ {Λ}_{i} {x}_{i} \leq {2}^{p}}{0 \leq land \left({x}_{1},…,{x}_{n}\right) \leq {2}^{p}}$ The tactic rewrites range obligations on logical and/or into the corresponding range over its parameters, by finding a suitable 2^{p} to apply the theorems. Such a strategy is not complete in general. Typically, land(x, y) < 38 is true whenever both x and y are in range 0 . . . 31, but this is also true in other cases.
   ∘ *Bit-Test Range:* Tighten bounds with respect to bits. The bit_test(a,b) function is predefined in WP and is equivalent to the ACSL expression (a & (1 << b)) != 0. The Qed engine has many simplification rules that applies to such patterns. An expression bit_test(n, k) with k a constant integer value greater or equal to 0 and lower than 128 is selected. The tactic uses this test to tighten the bounds of n. $Δ = G ⊳ Δ , T = G$ $Δ , F = G$ With $T ≡ bit_test \left(n, k\right) ∧ \left(0\leq n⇒{2}^{k}\leq n\right)$ $F ≡ ¬ bit_test \left(n, k\right) ∧ \left(0\leq n<{2}^{k + 1}⇒n<{2}^{k}\right)$
   *∘ Bitwise:* Decompose equalities over N-bits, for selected integer equality and number of bits. Providing the two members of the equality are in range 0..2^{N - 1}, the equality is decomposed into N bit-tests equalities: $Δ = G ⊳ Δ = 0 \leq a , b < {2}^{N}$ $σ \left(Δ\right) = σ \left(G\right)$ where σ is the following substitution:$σ ≡ \left[a=b←{∧}_{k ∈ 0 ... N - 1} bit_test\left(a, k\right)=bit_test\left(b, k\right)\right]$
   ∘ *Congruence:* Simplify Divisions and Products. This tactic rewrites integer comparisons involving products and divisions. The tactic applies one of the following theorems to the current obligation. In the following lemmas, k, k', and n are integer constants, a and b any integer terms. The notation k|n stands for k divides n. The lemmas are extended to non-strict inequalities and non-positive constants in a natural way. $0 < k , a < n / k ⇒ k . a < n$ $k \left|n, a=n/k\right. ⇔ k . a = n$ $¬ \left(k\left|n\right.\right) , k . a = n ⇒ false$ $0 < k , a < k . \left(b+1\right) ⇒ a / k \leq b$ $0 < k , 0 < k ′ , k ′ . a \leq k . b ⇒ a / k \leq b / k ′$ $n \left|k,\right. n \left|k′\right. , \left(k/n\right) . a = \left(k′/n\right) . b ⇔ k . a = k ′ . b$
   ∘ *Induction:* Start a proof by integer induction. Any integer expression e can be selected in the proof with a base value b (which defaults to 0). The tactic generates a proof by induction on e, that is, the base case e = b and then the cases e < band b < e.
      Formally, the initial obligation Δ₀ ⊨ G₀ is first generalized into Δ, P(e) ⊨ Q(e). The tactic then proceed by (strong) induction over n for G(n) ≡ P (n) ⇒ Q(n): $Δ = G \left(n\right) ⊳ Δ , n = b = G \left(n\right)$ $Δ , b < n , ∀ i , b \leq i < n ⇒ G \left(i\right) = G \left(n\right)$ $Δ , b > n , ∀ i , n < i \leq b ⇒ G \left(i\right) = G \left(n\right)$
   ∘ *Mod-Mask:* Rewrite bitmask into/from modulo. This tactic is used to rewrite a bitmask into a modulo (or a modulo into a bitmask) when possible.
      A selected expression e of the form b%m can be rewritten into b&(m - 1), if 0 ≤ b and m is a positive power of 2. The inverse rewriting can also be applied.
      Since establishing that m is a positive power of 2 can be hard, the tactic has several behaviors. If Qed can prove immediately that an operand m is a positive power of 2, the tactic only generates the guard 0 ≤ b and the rewritten obligation. If it is not the case (situation "Mod-Mask (hard)"), the guard consists of two conditions: 0 ≤ b and m is a positive power of 2. This guard involves an existential quantification, so it can be hard to prove. When the selected term is a bitmask, a checkbox is added in the configuration of the tactic to select which argument of the bitmask should be seen as b and which as m-1.
   ∘ *Overflow:* Integer Conversions. This tactic split machine integer conversions into three cases: value in integer range, lower than range and upper than range. The tactic applies on expression with pattern to_iota(e) where iota is a machine-integer type name, eg. to_uint32. $Δ = G ⊳ {σ}_{id} \left(Δ\right) = low \leq e \leq up ⇒ {σ}_{id} \left(G\right)$ ${σ}_{+} \left(Δ\right) = low < e ⇒ {σ}_{+} \left(G\right)$ $σ_ \left(Δ\right) = e < up ⇒ σ_ \left(G\right)$ where
      [low..up] is the range of the iota integer domain, ${σ}_{id} = \left[to_iota\left(e\right)\to e\right] ,$ ${σ}_{+} = \left[to_iota\left(e\right)\to overflow\left(e\right)\right] ,$ ${σ}_{-} = \left[to_iota\left(e\right)\to overflow\left(e\right)\right] .$
   ∘ Range: Enumerate a range of values for an integer term. Any integer expression e can be selected in the proof, with a range of numerical values a ... b. The proof goes by case for each e = a ... e = b, plus the side cases e < a and e > b: $Δ = G ⊳ Δ$, e < a ⊨ G $Δ , e = a = G$ $Δ , e = b = G$ $Δ , e > b = G$
   ∘ *Shift:* Transform logical shifts into arithmetics. For positive integers, logical shifts such as a << k and a >> k where k is a positive constant can be interpreted into a multiplication or a division by 2^{k}.
      When selecting a logical-shift, the tactic performs: $Δ = G ⊳ Δ = 0 \leq a$ $σ \left(Δ\right) = σ \left(G\right)$ where: σ = [Isl(a, k) ← a * 2^{k}] for left-shift, $σ = \left[lsr\left(a, k\right)←a/{2}^{k}\right] for right - shifts .$
- Domain Specific Tactics
   *∘ Array:* Decompose array access-update patterns. An expression e ≡ a[k1 → v][k2] is selected, then: $Δ = G ⊳ Δ , {k}_{1} = k 2 , e = v = G$ $Δ , k 1 \neq k 2 , e = a \left[k2\right] = G$
   ∘ *Havoc:* Go Through Assigns. This tactic is dedicated to *Havoc* predicates generated by a complex assigns clause. An address is selected, and if the address is not assigned, the memory at this address is unchanged.
   ∘ *Separated:* Expand Separation Cases. This tactic decomposes a separated(a, n, b, m) predicate into its four base cases: a and b have different bases, a + n ≤ b, b + m ≤ a, and a[0..n - 1] and b[0..m - 1] overlap. The regions are separated in the first three cases, and not separated in the overlapping case.
   ∘ *Sequence:* Unroll repeat-sequence operator. In this section, let us use Aⁿ for the ACSL notation A *^ n, the repeat list operation, and A ⊕ I for the list concatenation.
      This tactic is used to transform Aⁿ sequences. Three behaviors can be selected: unroll left that rewrites the list Aⁿ into A ⊕ Aⁿ⁻¹, unroll right that rewrites the list Aⁿ into Aⁿ⁻¹ ⊕ A and unroll sum that rewrites the list A^{n1+...+nk} into Aⁿ¹ ⊕ ... ⊕ A^{nk}. For unroll left and right, a negative value leads to an empty list. For unroll sum, one must prove that all nI are positive.
      ▪ Rule for unroll left: $Δ = G ⊳ Δ \left[{A}^{n}←A⊕{A}^{n - 1}\right] , n > 0 = G \left[{A}^{n}←A⊕{A}^{n - 1}\right]$ $Δ \left[{A}^{n}←\left[\right]\right] , n \leq 0 = G \left[{A}^{n}←\left[\right]\right]$
      ▪ Rule for unroll right: $Δ = G ⊳ Δ \left[{A}^{n}←{A}^{n - 1}⊕A\right] , n > 0 = G \left[{A}^{n}←{A}^{n - 1}⊕A\right]$ $Δ \left[{A}^{n}←\left[\right]\right] , n \leq 0 = G \left[{A}^{n}←\left[\right]\right]$
      ▪ Rule for unroll sum: $Δ = G ⊳ Δ = i = 1 k 0 \leq {n}_{i}$ $Δ \left[{A}^{{\sum }_{i = 1}^{k} {n}_{i}}←{⊕}_{i = 1}^{k}{A}^{ni}\right] = G \left[{A}^{{\sum }_{i = 1}^{k} {n}_{i}}←{⊕}_{i = 1}^{k}{A}^{ni}\right]$
   *∘ Validity:* Unfold validity and range definitions. A selected validity expression (valid_rd, valid_rw, invalid or included) is unfolded to a Qed term.

Alternatively or in addition to these usual tactics, any custom tactics that would be useful to the skilled person can be included.

Whatever the list of given elementary strategies/tactics, said set of proof strategies preferably comprises a proof strategy for each sequence of up to h≤k different elementary strategies of said list of given elementary strategies (h is the "max length" of strategies). In other words, the set of proof strategy can include exhaustively any combination of 1 to h tactics of the list (without repetition).

The strategies can be taken in the increasing order of length (and in the lexicographic order for sequences of the same length) as follows:

```
    // elementary proof strategies (tactics):
    T1, ..., Tk,
    // combinations of two:
    T1T2, ..., T1Tk,
    T2T3, ..., T2Tk,
    ...
    Tk-1Tk,
    // combinations of three:
    T1T2T3, ..., T1T2Tk,
    ...
    Tk-2Tk-1Tk,
    // combinations of four:
    ...
    // combinations of h:
    ...
    The resulting composed strategies are denoted by S1, ..., SN.
```

In some embodiment, the set of proof strategies is predefined, but alternatively step (b) may comprise generating said set from the list of given elementary strategies (and even possibly directly from a list of given tactics), in particular by constructing each sequence of up to h≤k different elementary strategies of said list of given elementary strategies.

In an example, we have k=6 given elementary strategies, based on the known tactics presented below
- Definition (Unfolding a subset of predicates)
- Split
- Mod-mask (with recursive application)
- Bit-test range (with recursive application)
- Overflow (with recursive application)
- Filter
Examples of corresponding elementary strategies are as follows:

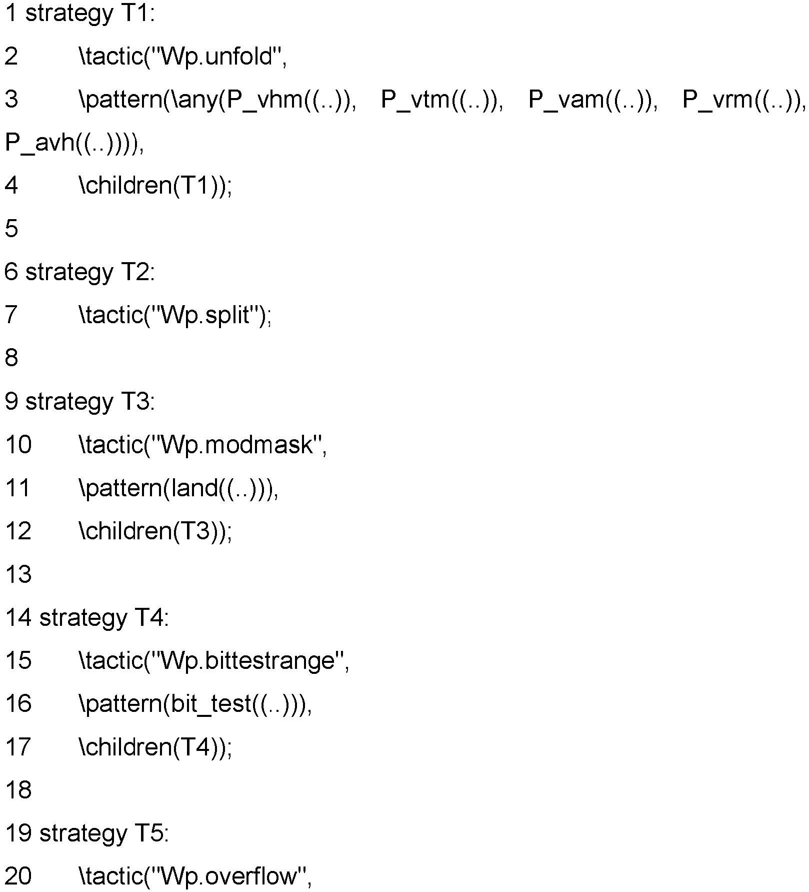

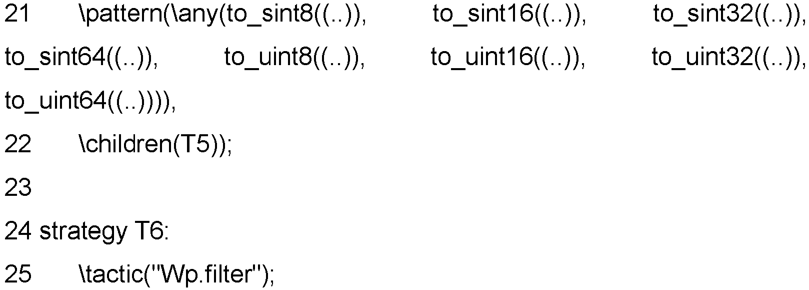

With h=3, we have a list of N=6+15+20=41 possible proof strategies.

Then, in a step (c), a priority proof strategy is selected among said set of proof strategies according to a given criterion. Indeed, the number N of proof strategies is rapidly high, and it is not possible to attempt the whole list.

Said criterion defines a prioritization value for each proof strategy. The idea is to sort the proof strategies using said criterion, as a heuristic. A strategy with a smaller prioritization value will be tried before those with higher values (or the opposite - both logics can be applied). A simple way to perform step (c) is to compute the value of the criterion for each proof strategy S₁, ..., S_{N}, and then to identify Sₚᵣᵢₒ such that the value is minimal (or maximal). In other words, if f : {S₁, $\left.…, {S}_{N}\right\} \to ℝ$ is a prioritization function (see after), ∀i≤N, f(Sₚᵣᵢₒ)≤f(Sᵢ).

Advantageously, said sorting is such that the first strategies are the ones which are the most likely to be successful. In order words, said criterion is preferably function of an expected success rate of the proof strategies or even directly 1 - expected success rate, or 1/expected success rate. Thus, the higher the expected success rate, the lower the prioritization (in the opposite case wherein a strategy with a higher prioritization value will be tried before those with smaller values, said criterion can be directly the expected success rate of the proof strategies).

It is to be noted that other criteria can be used, such as the duration of execution of proof strategies: it could be preferred to firstly attempt the fastest strategies. Several criteria can be further combined as a global criterion taking into account several aspects, and any heuristic can be used.

In the following description, we will use the preferred criterion 'expected success rate of the proof strategies', and several embodiments will be presented below.

If the following step (d) the selected priority proof strategy is applied so as to attempt to discharge at least one of said proof obligations. **In** more details, the elementary strategies of the priority proof obligation are applied following the sequence, and finally the possible automated prover run.

Again step (d) can be performed for a given unproven obligation.

If applying the priority strategy allows proving the current obligation, then this obligation is discharged and we move to the next unproven obligation and steps (c) to (d) are repeated.

If applying the priority strategy does not allow proving the current obligation, step (c) can be repeated so as to select a new priority proof strategy among other proof strategies of the set then step (d) is repeated. As explained, step (c) can advantageously directly sort the set of proof strategies, with the priority proof strategy as the first, so that after a failed step (d), it can be directly repeated with the next proof strategy as the new priority proof strategy. **If** every proof strategy of the set is attempted in vain, the obligation is left as unprovable.

Mathematically, the following process can be performed
- Choose an untreated obligation g,
- consequently apply proof strategies Sᵢ according to their prioritization value f(Sᵢ) in the increasing order (or alternatively decreasing, depending on the function), taking strategies with higher (respectively, smaller) prioritization values first.
- As soon as the obligation g is proved, move to the next untreated obligation.
- When all strategies are tried, move to the next untreated obligation, or exit when all obligation are treated.

In a final step (e), it can be determined whether the correctness of said target computer program is verified as a function of the proof obligations that have been successfully discharged.

As explained, the output may be a list of discharged proof obligations, a Boolean, a score, etc., for instance transmitted to the client terminal 1.

### Prioritization

According to a first embodiment, the value of the criterion for a proof strategy is computed based on "characteristics" of proof obligations.

The idea of a characteristic is to recognize similar obligations for estimating expected success rates based on the known success rates of strategies over proof obligations with the same characteristics. Indeed, it is often the case that if a strategy was successful in proving some obligations with characteristic c, it can be expected to prove another obligation with this characteristic. In that variant of the invention, we use relative success rates of a strategy for a characteristic.

Assume we define a finite number of characteristics of proof obligations C = {cⱼ}. A characteristic will typically be denoted by c (with or without indices). The fact that proof obligation g has characteristic c is denoted g ∈ c, otherwise we write g ∉ c. From a set theory viewpoint, a characteristic c can be seen as a set of obligations, more precisely, the subset of obligations of G having this characteristic. We do not assume that every obligation has at least one or at most one characteristic (so the subsets cⱼ ⊆ G do not have any specific property).

Examples of characteristics include:
- the fact that a proof obligation comes from a given global property (like a metaproperty in Frama-C/MetAcsl),
- the fact that a proof obligation has a given predicate in its conclusion.

Other relevant characteristics (related to a specific hypothesis in the obligation context, presence in a specific function, etc.) can be defined.

For a proof strategy S and a characteristic c, we denote by Atmt_{c}(S) the number of obligations g having characteristic c for which an attempt was performed to run strategy S for obligation g, and by Succ_{c}(S) the number of successfully proven obligations g with characteristic c using strategy S. A relative success rate Rate_{c}(S) of strategy S for (obligations of) characteristic c is defined as the number of successfully proved obligations using S divided by the number of tried obligations (if it is not zero): Rate_{c}(S) = Succ_{c}(S)/Atmt_{c}(S), or is undefined if strategy S has not been tried to prove an objective with characteristic c (that is, if Atmt_{c}(S) = 0).

We denote by δ (with 0 ≤ δ ≤ 1) an optional threshold which will be used to determine whether the relative success rate Rate_{c}(S) is significant enough (to avoid prioritizing strategies with a very small success rate).

In a variant of the invention, during step (d), the success rates can be dynamically updated.

The idea is to record relative success rates of considered proof strategies for obligations characteristics and use them to prioritize strategies in the following way. Every time strategy Sᵢ is applied to prove obligation g, the number of attempts of Sᵢ for each characteristic c of g can be incremented:
Atmt_{c}(Sᵢ) := Atmt_{c}(Sᵢ) + 1, for all c such that g ∈ c.

Moreover, every time strategy Sᵢ successfully proves obligation g, the number of successful attempts of Sᵢ for each characteristic c of g can also be incremented:
Succ_{c}(Si) := Succ_{c}(Si) + 1, for all c such that g ∈ c.

When choosing a next priority proof strategy to apply for a given obligation g, it is possible to consider the set of candidate proof strategies for obligation g having a (defined) relative success rate greater than the fixed threshold for at least one of the characteristics of g: ${Σ}_{g} = \left\{S\left|{Rate}_{c}\left(S\right)>δ for some c with g∈c\right.\right\}$
and to consider as prioritization value for every candidate strategy S ∈ Σ_{g} the value min{1-Rate_{c}(S) | c ∈ C with g ∈ c}. Note that the value 1 can be directly set for other proof strategies (or another prioritization function can be used in addition - see below)

Notice that the threshold value δ > 0 is used to ignore strategies which were successful very occasionally (success rate close to 0) and whose utility was not sufficiently confirmed. A variant of invention with the threshold value δ = 0 does not ignore those strategies.

According to a second embodiment, the criterion can be directly computed using a prioritization function $f : \left\{{T}_{1}, … ,{T}_{k}\right\} \to ℝ$, for instance outputting a positive integer priority value 1 ≤ f(Tᵢ) ≤ k for each block Tᵢ, and then extending f to a prioritization function $f : \left\{{S}_{1}, … ,{S}_{N}\right\} \to ℝ$ associating a positive value to each strategy Sᵢ = T_{iq-1} ... Tᵢ₁Tᵢ₀ composed of q elementary strategies (with 1 < q ≤ h).

In a variant of the invention, the values f(Tᵢ) can be assigned arbitrarily, for instance f(Tᵢ)=1 or f(Tᵢ)=i.

In a variant of the invention, when an existing set of "manual" proof scripts is available (which could be a subset of our set of proof strategies), the value of f(Tᵢ) is set or updated by counting the number x of occurrences of the tactic on which elementary strategy Tᵢ is based in the proof scripts of the available set, so that it is decreasing with x. it can be set for instance f(Ti) := f(Ti) + 1 - x/(x + 1), or, equivalently f(Ti) := f(Ti) + 1/(x + 1).

As to the extension of f to proof strategies, extended f is preferably defined so that f(T_{iq-1} ... Tᵢ₁Tᵢ₀) ≥ f(T_{iq-1})+ ... + f(Tᵢ₀).

For example: f(T_{iq-1} ... Tᵢ₁Tᵢ₀) = f(T_{iq-1})(k+2)^{q-1}+... + f(Tᵢ₁) (k+2)¹+ f(Tᵢ₀).

According to a third embodiment, the criterion can be computed using an artificial intelligence model, trained using machine learning techniques.

The AI model can be in particular a neural network, for instance of the transformer type, taking as input a proof obligation or directly said first/second code instructions, and outputting a vector of size N such that the i-th value of said vector represents the expected success rate of the proof strategy Sᵢ.

To this end, the training database can list reference proof obligations associated with the proof strategies that have allowed proving these reference proof obligations, or directly reference first/second code instructions and the set of proof strategies that have allowed proving the reference proof obligations constructed for this reference first/second code instructions.

In other words, the AI model is trained so as to predict, for a given training input, the corresponding proof strategy(ies) that have worked. Any loss function can be used.

Hence, when trained, the AI model becomes able to work like in the first embodiment: it prioritizes proof strategies that have been successful for similar obligations.

The training database can be stored in the memory 22 of the verification server 2, and the training can be performed by the processing unit 21 of the server 2 in a prior step (a0). Note that after each occurrence of the present method, the training database can be updated, and the AI model be refined accordingly in a new occurrence of step (a0).

Again, the present invention is not limited to any specific criterion or any prioritization function for computing said criterion. Note that several embodiments, and in particular the prioritization functions of several embodiments, can be combined, for instance for the first and second ones: a global prioritization function can output a value based on the outputs of both the first and second prioritization functions.

For example, if we consider as prioritization value for every candidate strategy S ∈ Σ_{g} the value min{1 - Rate_{c}(S) | c ∈ C with g ∈ c} (first embodiment), it is very advantageous to use the function f of the second embodiment for all the other proof strategies (those with Rate_{c}(S) ≤ δ).

Indeed, candidate strategies receive prioritization values in the interval [0, 1], and therefore are considered before all other strategies whose prioritization value is ≥ 1 by construction of f, while allowing to easily compute the criterion for every proof strategy. As explained, the threshold value δ > 0 is used to ignore strategies which were successful very occasionally (success rate close to 0) and whose utility was not sufficiently confirmed. Conversely, setting the threshold value δ = 1 means that all strategies will keep their prioritization value as computed according to the second embodiment, regardless of their relative success rates. Therefore, we have an easy parametrization to effectively balance between first and second embodiments.

### Server

According to a second aspect, the invention relates to the verification server 2 for implementing the method according to the first aspect, i.e. for automatically verifying the correctness of computer programs.

As explained, this server 2 comprises at least data processing means 21 and a memory 22.

The verification server 2 is connected through a network 20 to at least one prover server 3, and possibly a client terminal 1 of a user.

The data processing unit 21 is configured to, for a target computer program being defined by first code instructions in a given programming language:
- Obtain a collection of mathematical proof obligations, the truth of which implies correctness of the target computer program;
- Construct a set of proof strategies, each strategy being defined as a sequence of at least one elementary strategy based on a proof tactic and/or at least one automated prover run, for attempting to discharge at least one of said proof obligations;
- Select a priority proof strategy among said set of proof strategies according to a given criterion;
- Apply the selected priority proof strategy so as to attempt to discharge at least one of said proof obligations;
- Determine whether the correctness of said target computer program is verified as a function of the proof obligations that have been successfully discharged.

### Computer program product

According to a third and a fourth aspect, the invention relates to a computer program product comprising code instructions for executing (on the data processing means 21 of the verification server 2) a method according to the first aspect for automatically verifying the correctness of a target computer program; as well as storage means readable by computer equipment (for example the data storage unit 22 of the verification server 2) on which this computer program product is found.

## Claims

1. A method for automatically verifying the correctness of a target computer program, said target computer program being defined by first code instructions in a given programming language, **characterized in that** it comprises performing, by a data processing unit (21) of a server (2), steps of:
(a) Obtaining a collection of mathematical proof obligations, the truth of which implies correctness of the target computer program;
(b) Constructing a set of proof strategies, each strategy being defined as a sequence of at least one elementary strategy based on a proof tactic and/or at least one automated prover run, for attempting to discharge at least one of said proof obligations;
(c) Selecting a priority proof strategy among said set of proof strategies according to a given criterion;
(d) Applying the selected priority proof strategy so as to attempt to discharge at least one of said proof obligations;
(e) Determining whether the correctness of said target computer program is verified as a function of the proof obligations that have been successfully discharged.

2. Method according to claim 1, wherein each proof strategy is defined as a sequence of at least one elementary strategy and at least one automated prover run.

3. Method according to claim 2, wherein each proof strategy is defined as a sequence of at least one elementary strategy then one automated prover run.

4. Method according to any one of claims 1 to 3, comprising a step (b0) before said step (b) of running said at least one automated prover so as to attempt to discharge each one of said proof obligations, steps (b) to (d) being performed only for the remaining proof obligations.

5. Method according to any one of claims 1 to 4, wherein the target computer program is associated to second code instructions in a behavioral specification language, defining said specifications of the target computer program, step (a) comprising generating collection of mathematical proof obligations from said first and second code instructions.

6. Method according to claim 5, wherein said first programming language is a language of the C-family, in particular C, and said behavioral specification language is ACSL.

7. Method according to any one of claims 5 and 6, comprising a step (a1) of automatically generating at least part of said second code instructions in the behavioral specification language from the first code instructions.

8. Method according to any one of claims 1 to 7, wherein each elementary strategy of each proof strategy is selected from a list of k>0 given elementary strategies.

9. Method according to claim 8, wherein said set of proof strategies comprises a proof strategy for each sequence of up to h≤k different elementary strategies of said list of given elementary strategies.

10. Method according to any one of claims 1 to 9 wherein said given criterion is function of an expected success rate of the proof strategies.

11. Method according to claim 10, wherein step (d) comprises updating said expected success rate of the proof strategies according to the result of the application of the selected priority proof strategy.

12. Method according to any one of claims 1 to 11, wherein steps (c) and (d) are performed for each proof obligation, the method comprising, if an occurrence of step (d) is not successful, repeating said steps (d) for a next selected priority proof strategy.

13. Method according to any one of claims 1 to 12, wherein step (c) comprises, sorting said set of proof strategies according to the given criterion, the priority proof strategy being selected as the first proof strategies of the sorted set.

14. A server (2) for automatically verifying the correctness of computer programs, **characterized in that** it comprises a data processing unit (21) configured to, for a target computer program being defined by first code instructions in a given programming language:
- Obtain a collection of mathematical proof obligations, the truth of which implies correctness of the target computer program;
- Construct a set of proof strategies, each strategy being defined as a sequence of at least one elementary strategy based on a proof tactic and/or at least one automated prover run, for attempting to discharge at least one of said proof obligations;
- Select a priority proof strategy among said set of proof strategies according to a given criterion;
- Apply the selected priority proof strategy so as to attempt to discharge at least one of said proof obligations;
- Determine whether the correctness of said target computer program is verified as a function of the proof obligations that have been successfully discharged.

15. Computer program product comprising code instructions for executing a method according to one of claims 1 to 13 for automatically verifying the correctness of a target computer program, when said program product is executed on a computer.

16. A storage medium readable by computer equipment on which is recorded a computer program product comprising code instructions for executing a method according to one of claims 1 to 13 for automatically verifying the correctness of a target computer program.
